# EUROPEAN PATENT APPLICATION

(11) **EP 4 830 597 A1**
(43) Date of publication of application: **28.10.2026**
(21) Application number: 24906398.3
(22) Date of filing: 18.12.2024
(51) Int. Cl.: A47J 31/00, G01G 23/01

(54) **LIQUID OUTPUT CONTROL METHOD AND BEVERAGE PREPARATION DEVICE**

(30) Priority: 20.12.2023 CN 202311764980
(71) Applicant: Suzhou Megarobo Technologies Co., Ltd., Suzhou, Jiangsu 215000 (CN)
(72) Inventor: MIAO, Xiongfei, Suzhou, Jiangsu 215000 (CN); ZHU, Wei, Suzhou, Jiangsu 215000 (CN); WANG, Jiangfeng, Suzhou, Jiangsu 215000 (CN)
(74) Representative: Grünecker Patent- und Rechtsanwälte PartG mbB
(86) International application number: PCT/CN2024/140287
(87) International publication number: WO 2025/130919

(57) **Abstract**

The present application provides a liquid output control method and a beverage preparation device. The control method comprises: an input unit receives a material formula, the material formula comprising a plurality of required target materials and required weights; and a processor determines, on the basis of the material formula, a target material having the greatest weight, controls liquid pumps corresponding to other target materials besides the target material having the greatest weight to execute a liquid discharge operation, then determines, on the basis of the current total liquid discharge amount and the total amount of a beverage to be prepared, an actual liquid discharge amount of the target material having the greatest weight, and controls a liquid pump corresponding to the target material having the greatest weight to execute a liquid discharge operation, thus the weight of the prepared beverage can be the same as a set weight even if the liquid pumps experience the problem of inaccurate liquid discharge. Therefore, according to the described control method, even if the liquid pumps experience the problem of inaccurate liquid discharge, it can be ensured that the weight of the beverage is the same as a standard weight, thereby suppressing the problem of deviation in beverage weight.

## Description

This application claims priority to Chinese Patent Application No. 202311764980.8, titled "LIQUID OUTPUT CONTROL METHOD AND BEVERAGE PREPARATION DEVICE", filed on December 20, 2023 with the China National Intellectual Property Administration, which is incorporated herein by reference in its entirety.

### FIELD

The present disclosure relates to the technical field of automatic control, and in particular to a method for controlling liquid output and a beverage preparation device.

### BACKGROUND

In industries such as tea and coffee beverages, to reduce labor costs and enhance the efficiency of beverage preparation, intelligent liquid output devices, also known as beverage preparation devices, are increasingly used. These devices are capable of automatically outputting various liquids such as tea infusions, coffee, and sugar based on recipes. In the beverage preparation devices available on the market, liquid pumps are primarily used as the main power mechanism for liquid output.

Typically, preparing a beverage requires the addition of multiple liquid materials. Currently, it is common practice for respective liquid pumps corresponding to the multiple liquid materials to operate simultaneously.

However, over extended periods of use, the liquid output accuracy of the liquid pumps may develop errors. If multiple liquid pumps operate simultaneously, the total weight of the beverage may deviate from the expected weight, adversely affecting the user experience.

### SUMMARY

In view of this, a beverage preparation device is provided according to the present disclosure, and the solution is as follows.

A method for controlling liquid output is provided, which is applied to a beverage preparation device. The beverage preparation device includes an input unit, a plurality of liquid storage tanks, a liquid outlet, a plurality of liquid pumps, and a processor. Each of the plurality of liquid storage tanks is in communication with the liquid outlet. The plurality of liquid pumps correspond one-to-one with the plurality of liquid storage tanks. Each liquid pump is configured to be controlled by the processor to output a liquid material from the respective liquid storage tank via the liquid outlet. The method includes:
receiving, by the input unit, a material recipe inputted by a user, where the material recipe includes a plurality of target materials required for a beverage to be prepared currently, and a required weight of each target material;
determining, by the processor, the target material with a maximum weight among the plurality of target materials based on the material recipe, where the target material with the maximum weight is the target material with the maximum required weight;
controlling, by the processor, the liquid pump corresponding to each target material other than the target material with the maximum weight to perform a liquid output operation; and
determining, by the processor after the liquid output operation of the liquid pump corresponding to each target material other than the target material with the maximum weight is performed, an actual liquid output amount of the target material with the maximum weight based on a current total liquid output amount and a total amount of the beverage to be prepared currently, and controlling, by the processor, the liquid pump corresponding to the target material with the maximum weight to perform a liquid output operation based on the actual liquid output amount.

In an implementation, before the processor controls the liquid pump corresponding to each target material to perform the respective liquid output operation, the method further includes:
determining, by the processor, whether the liquid pump corresponding to the target material is a to-be-calibrated liquid pump; and
in response to the liquid pump corresponding to the target material being the to-be-calibrated liquid pump, calibrating, by the processor, the liquid pump during controlling the liquid pump to perform the liquid output operation based on the material recipe.

In an implementation, the calibrating, by the processor, the liquid pump during controlling the liquid pump to perform the liquid output operation based on the material recipe includes:
controlling, by the processor, the to-be-calibrated liquid pump to perform a first liquid output operation to output a liquid material with a first weight;
controlling, by the processor, the to-be-calibrated liquid pump to perform a second liquid output operation to output a material with a second weight; and
calibrating the to-be-calibrated liquid pump based on the first weight, the second weight, and respective rotation amounts of the to-be-calibrated liquid pump during the first liquid output operation and the second liquid output operation, where
a sum of the first weight and the second weight is less than a total liquid output amount of the to-be-calibrated liquid pump required by the material recipe.

In an implementation, the calibrating the to-be-calibrated liquid pump based on the first weight, the second weight, and the respective rotation amounts of the to-be-calibrated liquid pump during the first liquid output operation and the second liquid output operation includes:
obtaining a first revolution count and a second revolution count, where the first revolution count is the rotation amount of the to-be-calibrated liquid pump during the first liquid output operation, and the second revolution count is the rotation amount of the to-be-calibrated liquid pump during the second liquid output operation; and
obtaining a constant-speed liquid output rate of the to-be-calibrated liquid pump based on the first weight, the second weight, the first revolution count, and the second revolution count, where the constant-speed liquid output rate is a liquid output amount per unit revolution of the to-be-calibrated liquid pump during constant-speed rotation.

In an implementation, the calibrating the to-be-calibrated liquid pump based on the first weight, the second weight, and the respective rotation amounts of the to-be-calibrated liquid pump during the first liquid output operation and the second liquid output operation further includes:
determining a rotation amount of the to-be-calibrated liquid pump during acceleration/deceleration stages based on a duration for the acceleration/deceleration stages of the to-be-calibrated liquid pump; and
determining a liquid output amount of the to-be-calibrated liquid pump during the acceleration/deceleration stages based on the constant-speed liquid output rate of the to-be-calibrated liquid pump and the rotation amount of the to-be-calibrated liquid pump during the acceleration/deceleration stages.

A beverage preparation device is provided, including:
an input unit configured to receive a material recipe inputted by a user, where the material recipe includes a plurality of target materials required for a beverage to be prepared currently, and a required weight of each target material;
a plurality of liquid storage tanks configured to store respective materials;
a liquid outlet, where each of the plurality of liquid storage tanks is in communication with the liquid outlet;
a plurality of liquid pumps corresponding one-to-one with the plurality of liquid storage tanks; and
a processor, which is configured to: determine the target material with a maximum weight among the plurality of target materials based on the material recipe, where the target material with the maximum weight is the target material with the maximum required weight; control the liquid pump corresponding to each target material other than the target material with the maximum weight to perform a liquid output operation based on the material recipe; and determine, after the liquid output operation of the liquid pump corresponding to each target material other than the target material with the maximum weight is performed, an actual liquid output amount of the target material with the maximum weight based on a current total liquid output amount and a total amount of the beverage to be prepared currently, and control the liquid pump corresponding to the target material with the maximum weight to perform a liquid output operation based on the actual liquid output amount.

In an implementation, the processor is further configured to, before controlling the liquid pump corresponding to each target material to perform the respective liquid output operation: determine whether the liquid pump corresponding to the target material is a to-be-calibrated liquid pump; and
calibrate, in response to the liquid pump corresponding to the target material being the to-be-calibrated liquid pump, the liquid pump during controlling the liquid pump to perform the liquid output operation based on the material recipe.

In an implementation, the processor is configured to calibrate the liquid pump by:
controlling the to-be-calibrated liquid pump to perform a first liquid output operation to output a liquid material with a first weight; controlling the to-be-calibrated liquid pump to perform a second liquid output operation to output a liquid material with a second weight; and calibrating the to-be-calibrated liquid pump based on the first weight, the second weight, and respective rotation amounts of the to-be-calibrated liquid pump during the first liquid output operation and the second liquid output operation, where
a sum of the first weight and the second weight is less than a total liquid output amount of the to-be-calibrated liquid pump required by the material recipe.

In an implementation, during calibration of the to-be-calibrated liquid pump based on the first weight, the second weight, and the respective rotation amounts of the to-be-calibrated liquid pump during the first liquid output operation and the second liquid output operation, the processor is configured to: obtain a first revolution count and a second revolution count, where the first revolution count is the rotation amount of the to-be-calibrated liquid pump during the first liquid output operation, and the second revolution count is the rotation amount of the to-be-calibrated liquid pump during the second liquid output operation; and determine a constant-speed liquid output rate of the to-be-calibrated liquid pump based on the first weight, the second weight, the first revolution count, and the second revolution count, where the constant-speed liquid output rate is a liquid output amount per unit revolution of the to-be-calibrated liquid pump during constant-speed rotation.

In an implementation, the processor is further configured to: determine a rotation amount of the to-be-calibrated liquid pump during acceleration/deceleration stages based on a duration for the acceleration/deceleration stages of the to-be-calibrated liquid pump; and determine a liquid output amount of the to-be-calibrated liquid pump during the acceleration/deceleration stages based on the constant-speed liquid output rate and the rotation amount of the to-be-calibrated liquid pump during the acceleration/deceleration stages.

Compared with the prior art, beneficial effects of the technical solution according to the present disclosure are described as follows.

The method according to the present disclosure includes: receiving, by the input unit, a material recipe, where the material recipe includes multiple target materials required for a beverage to be prepared currently, and a required weight of each target material; determining, by the processor, the target material with a maximum weight based on the material recipe; controlling, by the processor, the liquid pump corresponding to each target material other than the target material with the maximum weight to perform a liquid output operation; and then determining, by the processor, an actual liquid output amount of the target material with the maximum weight based on a current total liquid output amount and a total amount of the beverage to be prepared currently, and controlling, by the processor, the liquid pump corresponding to the target material with the maximum weight to perform a liquid output operation based on the actual liquid output amount. Since the target material with the maximum weight impacts slightly on the taste of the beverage and is not added at the beginning, its actual liquid output amount is determined based on the total amount of the beverage to be prepared currently and the total liquid output amount of the liquid pump(s) corresponding to the target material(s) other than the target material with the maximum weight. In this way, even if the liquid output of the liquid pump corresponding to the target material with the maximum weight and/or the liquid pumps corresponding to other target materials are inaccurate, the weight of the prepared beverage can still match the predetermined weight. Therefore, with the method, deviations in beverage weight are mitigated even when the liquid pump exhibits liquid output inaccuracies, thereby ensuring consistency in beverage weight and improving the user experience.

### BRIEF DESCRIPTION OF THE DRAWINGS

To clearly illustrate the technical solutions in the embodiments of the present disclosure or in the prior art, the drawings required for describing the embodiments or the prior art are introduced briefly hereinafter. Apparently, the drawings in the following description are merely embodiments of the present disclosure, and for those skill in the art, other drawings can be obtained from the provided drawings without creative effort.

The structure, scale, and size shown in the drawings of this specification are only used for cooperation with the contents disclosed in the specification to facilitate reading and understanding by those skilled in the art, instead of limiting the conditions under which the present disclosure can be implemented, and thus have no technically substantive significance. Any structural modifications, changes in scale, or adjustments in size without affecting effectiveness and purpose of the present disclosure should fall within the scope of the technical contents disclosed in the present disclosure.
FIG. 1 is a schematic structural diagram of a beverage preparation device according to the present disclosure; and
FIG. 2 is a flowchart of a method for controlling liquid output according to the present disclosure.

### DETAILED DESCRIPTION

The embodiments of the present disclosure are clearly and completely described below in conjunction with the drawings in the embodiments of the present disclosure. Apparently, the described embodiments are only a part rather than all of the embodiments of the present disclosure. Based on the embodiments of the present disclosure, all other embodiments obtained by those skilled in the art without creative effort shall fall within the scope of protection of the present application.

To make the above objectives, features, and advantages of the present disclosure more obvious and understandable, the present disclosure is further described in detail below with reference to the drawings and specific embodiments.

As described in the background section, with prolonged use of a beverage preparation device, its liquid output accuracy may deteriorate, resulting in significant deviations in beverage weight and negatively impacting the user experience.

Moreover, if the liquid output accuracy of the beverage preparation device deteriorates, it can also cause the proportions of various materials in the beverage to not strictly match the beverage recipe, adversely affecting the taste of the beverage.

To address the above issues, liquid pumps are typically calibrated to ensure their liquid output accuracy. The calibration method in the prior art includes: controlling the liquid pump to operate for a fixed revolution count/a fixed duration to allow a liquid to flow into a cup, weighing the liquid, and calculating a liquid output amount per unit duration/revolution count to calibrate the liquid pump. However, the material outputted during this calibration process of the above calibration method cannot be precisely proportioned with other materials to achieve a finished product recipe and cannot be used for beverage preparation, resulting in material wastage.

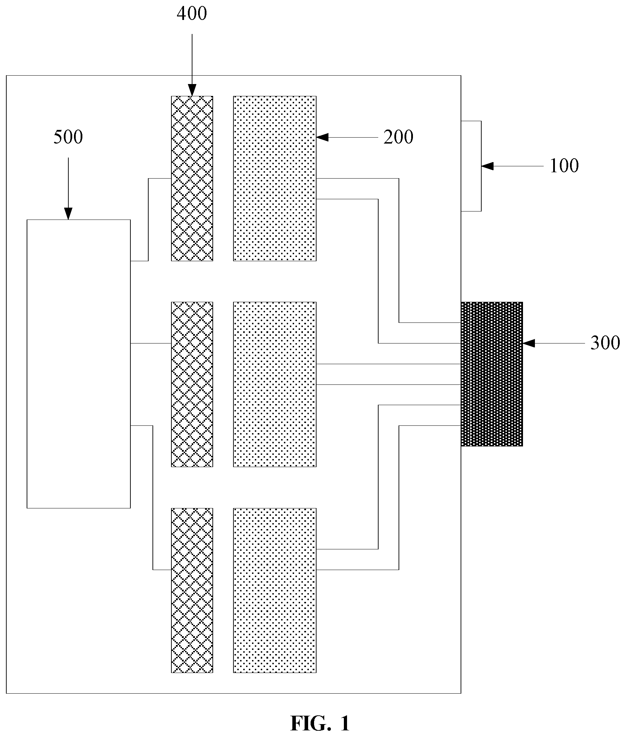

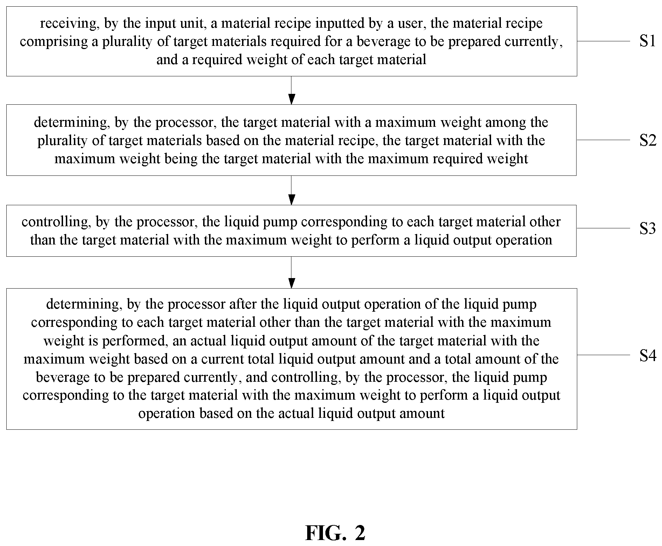

Based on the above, a method for controlling liquid output is provided according to the present disclosure. The method is applied to a beverage preparation device. As shown in FIG. 1, the beverage preparation device includes: an input unit 100, multiple liquid storage tanks 200, a liquid outlet 300, multiple liquid pumps 400, and a processor 500. Each of the multiple liquid storage tanks 200 is in communication with the liquid outlet 300. The multiple liquid pumps 400 correspond one-to-one with the multiple liquid storage tanks 200, and each liquid pump 400 is configured to be controlled by the processor 500 to output a liquid material from the respective liquid storage tank 200 via the liquid outlet 300. Based on this, as shown in FIG. 2, which is a flowchart of the method for controlling liquid output according to the present disclosure, the method includes steps S1 to S4.

In step S1, the input unit 100 receives a material recipe inputted by a user, where the material recipe includes multiple target materials required for a beverage to be prepared currently, and a required weight of each target material.

In steps S2, the processor determines the target material with a maximum weight among the multiple target materials based on the material recipe, where the target material with the maximum weight is the target material with the maximum required weight among the multiple target materials.

In step S3, after the target material with the maximum weight is determined, the processor 500 controls the liquid pump corresponding to each target material other than the target material with the maximum weight to perform a liquid output operation. That is, the processor 500 activates the liquid pump corresponding to each target material other than the target material with the maximum weight while keeping the liquid pump corresponding to the target material with the maximum weight inactive.

In step S4, after the liquid output operation of the liquid pump corresponding to each target material other than the target material with the maximum weight is performed, the processor determines an actual liquid output amount of the target material with the maximum weight based on a current total liquid output amount and a total amount of the beverage to be prepared currently. That is, the processor determines the actual liquid output amount of the target material with the maximum weight based on the total liquid output amount of the liquid pump(s) corresponding to the target material(s) other than and the total amount of the beverage to be prepared currently. After the actual liquid output amount of the target material with the maximum weight is determined, the processor controls the liquid pump corresponding to the target material with the maximum weight to perform a liquid output operation based on the actual liquid output amount.

Specifically, if the multiple target materials include a first material, a second material, and a third material, which have corresponding required weights of 200 g, 100 g, and 50 g, respectively, then the first material is the target material with the maximum weight. First, the processor 500 controls the liquid pumps corresponding to the second material and the third material to respectively perform liquid output operations. Then, the actual liquid output amount of the first material is determined based on a difference between the total liquid output amount of the liquid pumps corresponding to the second material and the third material and the total amount of the beverage to be prepared. The processor 500 controls the liquid pump corresponding to the first material to output the above actual liquid output amount. For example, if the total liquid output amount of the liquid pumps corresponding to the second material and the third material is 145 g, then the actual liquid output amount of the first material is 205 g. This ensures that deviations in the output amounts of the second material and the third material are compensated for during output of the first material, thereby keeping the total amount of the beverage unchanged and matching the standard weight.

From the above, it can be seen that the method ensures that the weight of the beverage remains the same as the standard weight even if the liquid pump exhibits liquid output inaccuracies, reduces deviations in beverage weight, and ensures consistency in beverage weight, thereby improving the user experience.

Furthermore, since the target material for liquid output amount compensation is the material with the maximum required weight, the impact on the taste of the beverage is minimized. Therefore, the method ensures consistency in beverage weight while minimizing any impact on the taste of the beverage, ensuring a satisfactory user experience.

As known from the foregoing, to prevent the issue of inaccurate liquid output by the liquid pump, the liquid pump is calibrated. Thus, in an embodiment of the present disclosure, before the processor controls the liquid pump corresponding to each target material to perform the liquid output operation, the method further includes the following steps.

The processor 500 determines whether the liquid pump 400 corresponding to the target material is a to-be-calibrated liquid pump.

In response to the liquid pump 400 corresponding to the target material being the to-be-calibrated liquid pump, the processor 500 calibrates the liquid pump during controlling the liquid pump 400 to perform the liquid output operation based on the material recipe. The processor may determine whether the liquid pump 400 is a to-be-calibrated liquid pump based on a most recent calibration date of the liquid pump 400.

Based on the above embodiment, in an embodiment of the present disclosure, the calibration of the liquid pump by the processor during controlling the liquid pump to perform the liquid output operation based on the material recipe includes the following steps.

The processor 500 controls the to-be-calibrated liquid pump to perform a first liquid output operation to output a liquid material with a first weight.

The processor controls the to-be-calibrated liquid pump to perform a second liquid output operation to output a material with a second weight.

A sum of the first weight and the second weight is less than a total liquid output amount of the to-be-calibrated liquid pump. The total liquid output amount of the to-be-calibrated liquid pump is a required liquid output amount of the to-be-calibrated liquid pump, i.e., the required weight of its corresponding target material. Thus, the sum of the first weight and the second weight is less than the required weight of the target material corresponding to the to-be-calibrated liquid pump.

If a liquid pump among the liquid pumps corresponding to multiple target materials is identified as the to-be-calibrated liquid pump, it means that the liquid pump may exhibit liquid output inaccuracies. In such cases, directly controlling the liquid pump to output the material with the required weight in one go is likely to result in the outputted weight not meeting the requirements, thereby adversely affecting the taste of the beverage. For example, excessive liquid output may prevent the beverage preparation process from continuing, leading to waste of materials. With the method provided in this disclosure, if the to-be-calibrated liquid pump is determined, the to-be-calibrated liquid pump is controlled to output liquid in multiple stages. This facilitates precise control over the liquid output amount of the to-be-calibrated liquid pump, aligning the liquid output amount of the to-be-calibrated liquid pump more closely with the required liquid output amount. It effectively mitigates the issues of inaccurate liquid output by the liquid pump, thereby ensuring the taste of the beverage.

Furthermore, as described above, the sum of the liquid output amounts during the multiple stages of liquid output of the to-be-calibrated liquid pump is less than the required liquid output amount of the to-be-calibrated liquid pump. Consequently, the calibration process can be completed during beverage preparation without resulting in waste of materials due to calibration.

Based on the above embodiment, in an embodiment of the present disclosure, the calibration of the to-be-calibrated liquid pump based on the first weight, the second weight, and respective rotation amounts of the to-be-calibrated liquid pump during the first liquid output operation and the second liquid output operation includes the following steps.

A first revolution count and a second revolution count are obtained. The first revolution count is the rotation amount of the to-be-calibrated liquid pump during the first liquid output operation, and the second revolution count is the rotation amount of the to-be-calibrated liquid pump during the second liquid output operation.

A constant-speed liquid output rate of the to-be-calibrated liquid pump is obtained based on the first weight, the second weight, the first revolution count, and the second revolution count. The constant-speed liquid output rate is a liquid output amount per unit revolution of the to-be-calibrated liquid pump during constant-speed operation. In an embodiment, the constant-speed liquid output rate is the liquid output amount per revolution of the to-be-calibrated liquid pump during constant-speed operation. The first weight is denoted by W1, the second weight is denoted by W2, the first revolution count is denoted by C1, the second revolution count is denoted by C2, and the constant-speed liquid output rate of the to-be-calibrated liquid pump is denoted by Cs, where Cs = (W2-W1) / (C2-C1).

Based on the above embodiment, in an embodiment of the present disclosure, the calibration of the to-be-calibrated liquid pump based on the first weight, the second weight, and the respective rotation amounts of the to-be-calibrated liquid pump during the first liquid output operation and the second liquid output operation further includes the following steps.

A rotation amount of the to-be-calibrated liquid pump during acceleration/deceleration stages is determined based on a duration for the acceleration/deceleration stages of the to-be-calibrated liquid pump. That is, a revolution count of the to-be-calibrated liquid pump during the acceleration/deceleration stages is determined.

A liquid output amount of the to-be-calibrated liquid pump during the acceleration/deceleration stages is determined based on the constant-speed liquid output rate and the rotation amount of the to-be-calibrated liquid pump during the acceleration/deceleration stages. The liquid output amount of the to-be-calibrated liquid pump during the acceleration/deceleration stages is denoted by W3, and the rotation amount of the to-be-calibrated liquid pump during the acceleration/deceleration stages is denoted by C3, where W3 = W1 - (C1-C3) * Cs.

It should be noted that upon receiving an operation instruction, the liquid pump first accelerates until reaching its predetermined rotational speed, operates at this constant speed until it receives a stop instruction, and then decelerates to a halt. In other words, each operating cycle of the liquid pump includes three stages: an acceleration stage, a constant-speed stage, and a deceleration stage. For a liquid pump, its rotational speed during constant-speed operation is predetermined based on its inherent performance characteristics. Ideally, the constant-speed liquid output rate should remain constant. However, due to prolonged use and functional degradation, degenerative changes may occur in the constant-speed liquid output rate of the liquid pump. Therefore, the liquid pump is calibrated at regular intervals to determine its current constant-speed liquid output rate and control the operation of the liquid pump based on the current constant-speed liquid output rate, ensuring the liquid output accuracy and reducing liquid output inaccuracies. Moreover, the constant-speed liquid output rate of the liquid pump should theoretically remain constant, and the liquid pump accelerates from zero to the constant-speed liquid output rate during the acceleration stage and decelerates from the constant-speed liquid output rate to zero during the deceleration stage. Therefore, the revolution counts during both the acceleration and deceleration stages should also remain constant. However, degenerative changes may also occur in the revolution counts during the acceleration and deceleration stages due to functional degradation of the liquid pump, necessitating periodic calibration to obtain current revolution counts during the acceleration and deceleration stages. Meanwhile, since the revolution counts during the acceleration and deceleration stages are fixed, the corresponding liquid output amounts during these stages should also be fixed. Similarly, degenerative changes may occur in the liquid output amounts during these stages with functional degradation of the liquid pump.

Based on the above, to ensure the liquid output accuracy of the liquid pump and reduce liquid output inaccuracies, the liquid pump is calibrated periodically with respect to the constant-speed liquid output rate, the revolution count during the acceleration/deceleration stages, and the liquid output amount during the acceleration/deceleration stages. The current constant-speed liquid output rate, the rotation amount during the acceleration/deceleration stages, and the liquid output amount during the acceleration/deceleration stages of the liquid pump are obtained. That is, current operating parameters of the liquid pump are obtained to control the liquid output operation of the liquid pump based on the current operating parameters of the liquid pump, thereby ensuring the liquid output accuracy of the liquid pump and effectively mitigating inaccuracies in liquid output.

It should be noted that in this embodiment, the rotation amount during the acceleration/deceleration stages includes both an acceleration revolution count and a deceleration revolution count. Accordingly, the liquid output amount during the acceleration/deceleration stages includes liquid output amounts during both the acceleration and deceleration stages. It should also be noted that, even when the liquid pump operates at a constant speed, its rotational speed is not perfectly fixed but remains stable within a certain range. Consequently, the constant-speed liquid output rate is not perfectly constant but remains within a stable range. Therefore, the constant-speed liquid output rate is obtained by calculation rather than measurement.

Based on the above embodiments, in an embodiment of the present disclosure, after the to-be-calibrated liquid pump is calibrated, the method further includes the following step.

The processor 500 controls the to-be-calibrated liquid pump to perform a third liquid output operation to output a material with a third weight.

A sum of the first weight, the second weight, and the third weight is equal to the total liquid output amount of the to-be-calibrated liquid pump. That is, the third liquid output operation is a compensatory liquid output operation, and the third weight is a compensation weight. This is to enable the actual liquid output amount of the to-be-calibrated liquid pump to meet the required weight of the corresponding target material.

The step of the processor 402 controlling the to-be-calibrated liquid pump to perform the third liquid output operation to output the material with the third weight includes the following steps.

A difference between the third weight and the liquid output amount during the acceleration/deceleration stages is obtained. Thus, the third difference is a liquid output amount during a constant-speed stage of the third liquid output operation.

A constant-speed revolution count for the third liquid output operation of the to-be-calibrated liquid pump is obtained based on a ratio of the difference to the constant-speed liquid output rate.

The processor controls the to-be-calibrated liquid pump to perform the third liquid output operation based on the constant-speed revolution count and the rotation amount during the acceleration/deceleration stages, to output the material with the third weight.

From the above, it can be seen that in the method, after the to-be-calibrated liquid pump is calibrated and the current operating parameters of the to-be-calibrated liquid pump are obtained, the constant-speed revolution count and a variable-speed revolution count for the third liquid output operation are obtained based on the current operating parameters of the to-be-calibrated liquid pump. The third liquid output operation is controlled based on the obtained constant-speed revolution count and the obtained variable-speed revolution count for the third liquid output operation. This enables the weight outputted during the third liquid output operation to be close to the third weight, makes the actual liquid output amount of the to-be-calibrated liquid pump consistent with its required liquid output amount, and effectively mitigates the issue of inaccurate liquid output.

In an embodiment of the present disclosure, the obtaining of the variable-speed revolution count of the to-be-calibrated liquid pump during the first liquid output operation includes the following steps.

An acceleration duration and a deceleration duration of the to-be-calibrated liquid pump during the first liquid output operation are obtained.

An acceleration revolution count is obtained based on the acceleration duration and an acceleration of the to-be-calibrated liquid pump, and a deceleration revolution count is obtained based on the deceleration duration and the acceleration of the to-be-calibrated liquid pump. It should be noted that for a liquid pump, its acceleration is related to its inherent performance characteristics and is a default value. Consequently, the accelerations during the acceleration stage and deceleration stage are equal, both being this default value.

A sum of the acceleration revolution count and the deceleration revolution count is equal to the variable-speed revolution count.

Specifically, the acceleration of the to-be-calibrated liquid pump is denoted by a, the acceleration duration is denoted by T1, and the deceleration duration is denoted by T2. Then, the variable-speed revolution count is calculated by C3 = 1/2aT1² + 1/2aT2², so as to obtain the variable-speed revolution count of the to-be-calibrated liquid pump. The variable-speed revolution count includes both the acceleration revolution count and the deceleration revolution count.

Similarly, the process of obtaining the variable-speed revolution count of the to-be-calibrated liquid pump during the second liquid output operation is the same as the above process, and is not repeated here.

The process of calibrating the to-be-calibrated liquid pump is described in detail below in a specific embodiment.

For example, the required liquid output amount of the to-be-calibrated liquid pump is 200 g. First, the processor 500 controls the to-be-calibrated liquid pump to perform a first liquid output operation with a liquid output amount of 30%, i.e., 200 g * 0.3 = 60 g. This specifically includes the following steps. A revolution count for the first liquid output operation is determined as slightly larger than a theoretical revolution count required for outputting 60 g of material. For example, the revolution count is determined as 60 g/5 + 5 = 10 revolutions. Real-time weighing is performed via a placing tray 500. When the liquid output amount is about to reach 60 g (e.g., when the liquid output amount reaches 50 g), the processor 500 sends a stop instruction to the to-be-calibrated liquid pump. After the to-be-calibrated liquid pump stops operating, parameters of the first liquid output operation are obtained and recorded, including the first weight outputted by the first liquid output operation, the first revolution count, and the variable-speed duration.

Then, controlled by the processor 500, a second liquid output operation is performed, with a liquid output amount of 70%, i.e., 200 g * 0.7 = 140 g. This specifically includes the following steps. A revolution count for the second liquid output operation is determined as slightly larger than a theoretical revolution count required for outputting 140 g of material. For example, the revolution count is determined as 140 g / 5 + 5 = 33 rotations. Real-time weighing is performed via the placing tray 500. When the liquid output amount is about to reach 140 g (e.g., when the liquid output amount reaches 130 g), the processor 500 sends a stop instruction to the to-be-calibrated liquid pump. After the to-be-calibrated liquid pump stops operating, parameters of the second liquid output operation are obtained and recorded, including the second weight outputted by the second liquid output operation, the second revolution count, and the variable-speed duration. It should be noted that the variable-speed duration of the first liquid output operation is equal to that of the second liquid output operation, and a predetermined rotational speed of the first liquid output operation is equal to that of the second liquid output operation.

Based on the first weight W1, the first revolution count C1, the second weight W2, the second revolution count C2, the acceleration a, the acceleration duration T1, and the deceleration duration T2, calibration parameters of the to-be-calibrated liquid pump are obtained as follows.

The variable-speed revolution count is C3 = 1/2aT1² + 1/2aT2²;

The constant-speed liquid output rate is Cs = (W2-W1) / (C2-C1);

The variable-speed liquid output amount is W3 = W1 - (C1-C3) * Cs.

It should be noted that the above variable-speed liquid output amount W3 is obtained based on the first weight W1, the first revolution count C1, the variable-speed revolution count C3, and the constant-speed liquid output rate Cs. However, it should be understood that the variable-speed liquid output amount W3 can also be obtained based on the first weight W2, the first revolution count C2, the variable-speed revolution count C3, and the constant-speed liquid output rate Cs, in which case the variable-speed liquid output amount is W3 = W2 - (C2-C3) * Cs.

The above embodiment describes the calibration process when the to-be-calibrated liquid pump is the to-be-calibrated liquid pump. Similarly, when another liquid pump is the to-be-calibrated liquid pump, the calibration process thereof is the same as the calibration process for the to-be-calibrated liquid pump, which is not repeated in the present disclosure.

It should be noted that if there is a to-be-calibrated liquid pump among the liquid pumps corresponding to the multiple target materials, the liquid output operation of the to-be-calibrated liquid pump is performed first, and calibration is performed during the liquid output operation. Afterwards, the liquid output operation of the liquid pump corresponding to each target material other than the target material corresponding to the to-be-calibrated liquid pump is performed. For example, the required liquid output amount of the to-be-calibrated liquid pump is 200 g. The constant-speed revolution count of the to-be-calibrated liquid pump = (200 g - W3) / Cs. The variable-speed revolution count is obtained in the calibration process. The liquid output operation of the to-be-calibrated liquid pump is then controlled based on the constant-speed revolution count and the variable-speed revolution count.

In addition, if there is a calibrated liquid pump among the liquid pumps corresponding to the multiple target materials, the constant-speed revolution count and the variable-speed revolution count for a current liquid output operation of the liquid pump are obtained based on the current operating parameters of the liquid pump which are recorded after calibration. The to-be-calibrated liquid pump is then controlled to perform a liquid output operation based on the constant-speed revolution count and the variable-speed revolution count for the current liquid output operation. Similarly, when another liquid pump is a calibrated liquid pump, the constant-speed revolution count and the variable-speed revolution count thereof are also obtained based on the recorded current operating parameters thereof, and the liquid output operation of the another liquid pump is controlled based on the obtained constant-speed revolution count and the obtained variable-speed revolution count.

It should also be noted that the liquid output operations of the liquid pumps corresponding to the target materials other than the target material with the maximum weight can be ordered based on their liquid output durations, for example, in a descending order of liquid output duration. However, the present disclosure is not limited to this, and the ordering may be performed based on other conditions, which is determined according to actual situations.

Correspondingly, a beverage preparation device is further provided according to the present disclosure. As shown in FIG. 1, the beverage preparation device includes an input unit 100, multiple liquid storage tanks 200, a liquid outlet 300, multiple liquid pumps 400, and a processor 500.

The input unit 100 is configured to receive a material recipe inputted by a user, where the material recipe includes multiple target materials required for a beverage to be prepared currently, and a required weight of each target material.

The multiple liquid storage tanks 200 are configured to store respective materials.

Each of the multiple liquid storage tanks 200 is in communication with the liquid outlet 300.

The multiple liquid pumps 400 correspond one-to-one with the multiple liquid storage tanks 200.

The processor 500 is configured to: determine the target material with a maximum weight among the multiple target materials based on the material recipe, where the target material with the maximum weight is the target material with the maximum required weight; control the liquid pump 400 corresponding to each target material other than the target material with the maximum weight to perform a liquid output operation based on the material recipe; and determine, after the liquid output operation of the liquid pump corresponding to each target material other than the target material with the maximum weight is performed, an actual liquid output amount of the target material with the maximum weight based on a current total liquid output amount and a total amount of the beverage to be prepared currently, and control the liquid pump 400 corresponding to the target material with the maximum weight to perform a liquid output operation based on the actual liquid output amount.

From the above, it can be seen that in the beverage preparation device, the processor first controls the liquid pump corresponding to each target material other than the target material with the maximum weight to perform a liquid output operation, and then controls the liquid pump corresponding to the target material with the maximum weight to perform a liquid output operation. The liquid output amount of the target material with the maximum weight equals a difference between the total weight of the beverage to be prepared and the total liquid output amount of the liquid pump(s) corresponding to the target material(s) other than the target material with the maximum weight. Therefore, even if the liquid pump exhibits inaccurate liquid output issues, the beverage preparation device can ensure that the weight of the beverage is the same as the standard weight, thereby reducing deviations in beverage weight, ensuring consistency in beverage weight, and improving the user experience.

Furthermore, since the target material for liquid output amount compensation is the material with the maximum required weight, the impact on the taste of the beverage is minimized. Therefore, the method ensures consistency in beverage weight while minimizing any impact on the taste of the beverage, ensuring a satisfactory user experience.

Based on the above embodiment, in an embodiment of the present disclosure, the processor 500 is further configured to, before controlling the liquid pump corresponding to each target material to perform the respective liquid output operation, determine whether the liquid pump corresponding to the target material is a to-be-calibrated liquid pump.

In response to the liquid pump corresponding to the target material being the to-be-calibrated liquid pump, the processor 500 is configured to calibrate the liquid pump 400 during controlling the liquid pump 400 to perform the liquid output operation based on the material recipe, so as to mitigate the issue of inaccurate liquid output of the liquid pump.

Based on the above embodiment, in an embodiment of the present disclosure, the processor 500 is configured to calibrate the liquid pump by the following operations.

The processor 500 controls the to-be-calibrated liquid pump to perform a first liquid output operation to output a liquid material with a first weight. The processor 500 controls the to-be-calibrated liquid pump to perform a second liquid output operation to output a liquid material with a second weight. The processor 500 calibrates the to-be-calibrated liquid pump based on the first weight, the second weight, and respective rotation amounts of the to-be-calibrated liquid pump during the first liquid output operation and the second liquid output operation.

A sum of the first weight and the second weight is less than a total liquid output amount of the to-be-calibrated liquid pump required by the material recipe.

In this embodiment, after the to-be-calibrated liquid pump is determined, the to-be-calibrated liquid pump is controlled to perform liquid output operations in multiple stages, with the sum of the liquid output amounts being less than the required liquid output amount. This facilitates precise control over the liquid output amount of the to-be-calibrated liquid pump, thereby enabling the liquid output amount of the to-be-calibrated liquid pump to be close to the required liquid output amount. It effectively mitigates issues of inaccurate liquid output of the liquid pump, thus ensuring the taste of the beverage. Moreover, the method prevents the actual liquid output amount of the to-be-calibrated liquid pump from exceeding its required liquid output amount. Thus, even if the material outputted by the to-be-calibrated liquid pump greatly affects the taste and is subject to high weight requirements, corrective actions (e.g., more precise liquid output operations) can be taken subsequently to meet the weight requirement for the material, ensuring the taste of the beverage.

Based on the above embodiment, in an embodiment of the present disclosure, during calibration of the to-be-calibrated liquid pump based on the first weight, the second weight, and the respective rotation amounts of the to-be-calibrated liquid pump during the first liquid output operation and the second liquid output operation, the processor is configured to obtain a first revolution count and a second revolution count, where the first revolution count is the rotation amount of the to-be-calibrated liquid pump during the first liquid output operation, and the second revolution count is the rotation amount of the to-be-calibrated liquid pump during the second liquid output operation; and the processer is configured to determine a constant-speed liquid output rate of the to-be-calibrated liquid pump based on the first weight, the second weight, the first revolution count, and the second revolution count, where the constant-speed liquid output rate is a liquid output amount per unit revolution of the to-be-calibrated liquid pump during constant-speed rotation.

Based on the above embodiment, in an embodiment of the present disclosure, the processor is further configured to: determine a rotation amount of the to-be-calibrated liquid pump during acceleration/deceleration stages based on a duration for acceleration/deceleration stages of the to-be-calibrated liquid pump; and determine a liquid output amount of the to-be-calibrated liquid pump during the acceleration/deceleration stages based on the constant-speed liquid output rate and the rotation amount of the to-be-calibrated liquid pump during the acceleration/deceleration stages.

It should be noted that the aforementioned constant-speed liquid output rate, the rotation amount during the acceleration/deceleration stages, and the liquid output amount during the acceleration/deceleration stages are described in detail in the embodiments of the above method and are not repeated herein.

In summary, a method for controlling liquid output and a beverage preparation device are provided according to the present disclosure. The method includes: receiving, by the input unit, a material recipe, where the material recipe includes multiple target materials required for a beverage to be prepared currently, and a required weight of each target material; determining, by the processor, the target material with a maximum weight based on the material recipe; controlling, by the processor, the liquid pump corresponding to each target material other than the target material with the maximum weight to perform a liquid output operation; and then determining, by the processor, an actual liquid output amount of the target material with the maximum weight based on a current total liquid output amount and a total amount of the beverage to be prepared currently, and controlling, by the processor, the liquid pump corresponding to the target material with the maximum weight to perform a liquid output operation based on the actual liquid output amount. Since the target material with the maximum weight impacts slightly on the taste of the beverage and is not added at the beginning, its actual liquid output amount is determined based on the total amount of the beverage to be prepared currently and the total liquid output amount of the liquid pump(s) corresponding to the target material(s) other than the target material with the maximum weight. In this way, even if the liquid output of the liquid pump corresponding to the target material with the maximum weight and/or the liquid pumps corresponding to other target materials are inaccurate, the weight of the prepared beverage can still match the predetermined weight, thereby mitigating deviations in beverage weight, ensuring consistency in beverage weight, and improving the user experience.

A first embodiment is as follows. A method for controlling liquid output is provided, which is applied to a beverage preparation device. The beverage preparation device includes an input unit, a plurality of liquid storage tanks, a liquid outlet, a plurality of liquid pumps, and a processor. Each of the plurality of liquid storage tanks is in communication with the liquid outlet. The plurality of liquid pumps correspond one-to-one with the plurality of liquid storage tanks. Each liquid pump is configured to be controlled by the processor to output a liquid material from the respective liquid storage tank via the liquid outlet. The method includes:
receiving, by the input unit, a material recipe inputted by a user, where the material recipe includes a plurality of target materials required for a beverage to be prepared currently, and a required weight of each target material;
determining, by the processor, the target material with a maximum weight among the plurality of target materials based on the material recipe, where the target material with the maximum weight is the target material with the maximum required weight;
controlling, by the processor, the liquid pump corresponding to each target material other than the target material with the maximum weight to perform a liquid output operation; and
determining, by the processor after the liquid output operation of the liquid pump corresponding to each target material other than the target material with the maximum weight is performed, an actual liquid output amount of the target material with the maximum weight based on a current total liquid output amount and a total amount of the beverage to be prepared currently, and controlling, by the processor, the liquid pump corresponding to the target material with the maximum weight to perform a liquid output operation based on the actual liquid output amount.

A second embodiment is as follows. Based on the method described in the first embodiment, before the processor controls the liquid pump corresponding to each target material to perform the respective liquid output operation, the method further includes:
determining, by the processor, whether the liquid pump corresponding to the target material is a to-be-calibrated liquid pump; and
in response to the liquid pump corresponding to the target material being the to-be-calibrated liquid pump, calibrating, by the processor, the liquid pump during controlling the liquid pump to perform the liquid output operation based on the material recipe.

A third embodiment is as follows. Based on the method described in any one of the first embodiment and the second embodiment, the calibrating, by the processor, the liquid pump during controlling the liquid pump to perform the liquid output operation based on the material recipe includes:
controlling, by the processor, the to-be-calibrated liquid pump to perform a first liquid output operation to output a liquid material with a first weight;
controlling, by the processor, the to-be-calibrated liquid pump to perform a second liquid output operation to output a material with a second weight; and
calibrating the to-be-calibrated liquid pump based on the first weight, the second weight, and respective rotation amounts of the to-be-calibrated liquid pump during the first liquid output operation and the second liquid output operation, where
a sum of the first weight and the second weight is less than a total liquid output amount of the to-be-calibrated liquid pump required by the material recipe.

A fourth embodiment is as follows. Based on the method described in any one of the first embodiment to the third embodiment, the calibrating the to-be-calibrated liquid pump based on the first weight, the second weight, and the respective rotation amounts of the to-be-calibrated liquid pump during the first liquid output operation and the second liquid output operation includes:
obtaining a first revolution count and a second revolution count, where the first revolution count is the rotation amount of the to-be-calibrated liquid pump during the first liquid output operation, and the second revolution count is the rotation amount of the to-be-calibrated liquid pump during the second liquid output operation; and
obtaining a constant-speed liquid output rate of the to-be-calibrated liquid pump based on the first weight, the second weight, the first revolution count, and the second revolution count, where the constant-speed liquid output rate is a liquid output amount per unit revolution of the to-be-calibrated liquid pump during constant-speed rotation.

A fifth embodiment is as follows. Based on the method described in any one of the first embodiment to the fourth embodiment, the calibrating the to-be-calibrated liquid pump based on the first weight, the second weight, and the respective rotation amounts of the to-be-calibrated liquid pump during the first liquid output operation and the second liquid output operation further includes:
determining a rotation amount of the to-be-calibrated liquid pump during acceleration/deceleration stages based on a duration for the acceleration/deceleration stages of the to-be-calibrated liquid pump; and
determining a liquid output amount of the to-be-calibrated liquid pump during the acceleration/deceleration stages based on the constant-speed liquid output rate of the to-be-calibrated liquid pump and the rotation amount of the to-be-calibrated liquid pump during the acceleration/deceleration stages.

A sixth embodiment is as follows. A beverage preparation device is provided, including:
an input unit configured to receive a material recipe inputted by a user, where the material recipe includes a plurality of target materials required for a beverage to be prepared currently, and a required weight of each target material;
a plurality of liquid storage tanks configured to store respective materials;
a liquid outlet, where each of the plurality of liquid storage tanks is in communication with the liquid outlet;
a plurality of liquid pumps corresponding one-to-one with the plurality of liquid storage tanks; and
a processor, which is configured to: determine the target material with a maximum weight among the plurality of target materials based on the material recipe, where the target material with the maximum weight is the target material with the maximum required weight; control the liquid pump corresponding to each target material other than the target material with the maximum weight to perform a liquid output operation based on the material recipe; and determine, after the liquid output operation of the liquid pump corresponding to each target material other than the target material with the maximum weight is performed, an actual liquid output amount of the target material with the maximum weight based on a current total liquid output amount and a total amount of the beverage to be prepared currently, and control the liquid pump corresponding to the target material with the maximum weight to perform a liquid output operation based on the actual liquid output amount.

A seventh embodiment is as follows. Based on the beverage preparation device described in the sixth embodiment, the processor is further configured to, before controlling the liquid pump corresponding to each target material to perform the respective liquid output operation: determine whether the liquid pump corresponding to the target material is a to-be-calibrated liquid pump; and
calibrate, in response to the liquid pump corresponding to the target material being the to-be-calibrated liquid pump, the liquid pump during controlling the liquid pump to perform the liquid output operation based on the material recipe.

An eighth embodiment is as follows. Based on the beverage preparation device described in any one of the sixth embodiment and the seventh embodiment, the processor is configured to calibrate the liquid pump by:
controlling the to-be-calibrated liquid pump to perform a first liquid output operation to output a liquid material with a first weight; controlling the to-be-calibrated liquid pump to perform a second liquid output operation to output a liquid material with a second weight; and calibrating the to-be-calibrated liquid pump based on the first weight, the second weight, and respective rotation amounts of the to-be-calibrated liquid pump during the first liquid output operation and the second liquid output operation, where
a sum of the first weight and the second weight is less than a total liquid output amount of the to-be-calibrated liquid pump required by the material recipe.

A ninth embodiment is as follows. Based on the beverage preparation device described in any one of the sixth embodiment to the eighth embodiment, during calibration of the to-be-calibrated liquid pump based on the first weight, the second weight, and the respective rotation amounts of the to-be-calibrated liquid pump during the first liquid output operation and the second liquid output operation, the processor is configured to: obtain a first revolution count and a second revolution count, where the first revolution count is the rotation amount of the to-be-calibrated liquid pump during the first liquid output operation, and the second revolution count is the rotation amount of the to-be-calibrated liquid pump during the second liquid output operation; and determine a constant-speed liquid output rate of the to-be-calibrated liquid pump based on the first weight, the second weight, the first revolution count, and the second revolution count, where the constant-speed liquid output rate is a liquid output amount per unit revolution of the to-be-calibrated liquid pump during constant-speed rotation.

A tenth embodiment is as follows. Based on the beverage preparation device described in any one of the sixth embodiment to the ninth embodiment, the processor is further configured to: determine a rotation amount of the to-be-calibrated liquid pump during acceleration/deceleration stages based on a duration for the acceleration/deceleration stages of the to-be-calibrated liquid pump; and determine a liquid output amount of the to-be-calibrated liquid pump during the acceleration/deceleration stages based on the constant-speed liquid output rate and the rotation amount of the to-be-calibrated liquid pump during the acceleration/deceleration stages.

The various embodiments in this specification are described in a progressive, parallel, or a combination of progressive and parallel manner. Each embodiment focuses on its differences from other embodiments, and reference may be made between the embodiments for identical or similar parts. For the device disclosed in the embodiments, as it corresponds to the method disclosed in the embodiments, the description thereof is relatively simple, and relevant details can be referred to the description of the method.

It should be noted that in the description of the present disclosure, orientation or positional relationships indicated by terms such as "upper", "lower", "top", "bottom", "inner", and "outer" are based on the orientation or positional relationships shown in the drawings. They are only for convenience of describing the present disclosure and simplifying the description, and do not indicate or imply that the referred device or element must have a specific orientation, or must be constructed and operated in a specific orientation, and therefore cannot be construed as limitations on the present disclosure. A component defined as being "connected" to another component may be directly connected to the another component or an intermediate element is provided therebetween.

It should be further noted that relationship terms such as "first" and "second" herein are only used to distinguish one entity or operation from another entity or operation, rather than necessitating or implying that such actual relationship or order exists between these entities or operations. Furthermore, the terms "comprising", "including", or any other variation thereof are intended to encompass non-exclusive inclusion, such that an article or device including a list of elements includes not only these elements but also other elements not expressly listed, or elements inherent to such article or device. Without further limitation, an element defined by the phrase "includes a..." does not exclude the presence of additional identical elements in the article or device including the said element.

The above description of the disclosed embodiments enables those skilled in the art to implement or use the present disclosure. Various modifications to these embodiments are apparent to those skilled in the art, and the general principles defined herein may be implemented in other embodiments without departing from the spirit or scope of the present disclosure. Therefore, the present disclosure is not limited to the embodiments shown herein but is consistent with the widest scope in accordance with the principles and novel features disclosed herein.

## Claims

1. A method for controlling liquid output, applied to a beverage preparation device, **characterized in that** the beverage preparation device comprises:
an input unit;
a plurality of liquid storage tanks;
a liquid outlet;
a plurality of liquid pumps; and
a processor, wherein
each of the plurality of liquid storage tanks is in communication with the liquid outlet, the plurality of liquid pumps correspond one-to-one with the plurality of liquid storage tanks, and each liquid pump is configured to be controlled by the processor to output a liquid material from the respective liquid storage tank via the liquid outlet; and
the method comprises:
receiving, by the input unit, a material recipe inputted by a user, wherein the material recipe comprises a plurality of target materials required for a beverage to be prepared currently, and a required weight of each target material;
determining, by the processor, the target material with a maximum weight among the plurality of target materials based on the material recipe, wherein the target material with the maximum weight is the target material with the maximum required weight;
controlling, by the processor, the liquid pump corresponding to each target material other than the target material with the maximum weight to perform a liquid output operation; and
determining, by the processor after the liquid output operation of the liquid pump corresponding to each target material other than the target material with the maximum weight is performed, an actual liquid output amount of the target material with the maximum weight based on a current total liquid output amount and a total amount of the beverage to be prepared currently, and controlling, by the processor, the liquid pump corresponding to the target material with the maximum weight to perform a liquid output operation based on the actual liquid output amount.

2. The method according to claim 1, **characterized in that** before the processor controls the liquid pump corresponding to each target material to perform the respective liquid output operation, the method further comprises:
determining, by the processor, whether the liquid pump corresponding to the target material is a to-be-calibrated liquid pump; and
in response to the liquid pump corresponding to the target material being the to-be-calibrated liquid pump, calibrating, by the processor, the liquid pump during controlling the liquid pump to perform the liquid output operation based on the material recipe.

3. The method according to claim 2, **characterized in that** the calibrating, by the processor, the liquid pump during controlling the liquid pump to perform the liquid output operation based on the material recipe comprises:
controlling, by the processor, the to-be-calibrated liquid pump to perform a first liquid output operation to output a liquid material with a first weight;
controlling, by the processor, the to-be-calibrated liquid pump to perform a second liquid output operation to output a material with a second weight; and
calibrating the to-be-calibrated liquid pump based on the first weight, the second weight, and respective rotation amounts of the to-be-calibrated liquid pump during the first liquid output operation and the second liquid output operation, wherein a sum of the first weight and the second weight is less than a total liquid output amount of the to-be-calibrated liquid pump required by the material recipe.

4. The method according to claim 3, **characterized in that** the calibrating the to-be-calibrated liquid pump based on the first weight, the second weight, and the respective rotation amounts of the to-be-calibrated liquid pump during the first liquid output operation and the second liquid output operation comprises:
obtaining a first revolution count and a second revolution count, wherein the first revolution count is the rotation amount of the to-be-calibrated liquid pump during the first liquid output operation, and the second revolution count is the rotation amount of the to-be-calibrated liquid pump during the second liquid output operation; and
obtaining a constant-speed liquid output rate of the to-be-calibrated liquid pump based on the first weight, the second weight, the first revolution count, and the second revolution count, wherein the constant-speed liquid output rate is a liquid output amount per unit revolution of the to-be-calibrated liquid pump during constant-speed rotation.

5. The method according to claim 4, **characterized in that** the calibrating the to-be-calibrated liquid pump based on the first weight, the second weight, and the respective rotation amounts of the to-be-calibrated liquid pump during the first liquid output operation and the second liquid output operation further comprises:
determining a rotation amount of the to-be-calibrated liquid pump during acceleration/deceleration stages based on a duration for the acceleration/deceleration stages of the to-be-calibrated liquid pump; and
determining a liquid output amount of the to-be-calibrated liquid pump during the acceleration/deceleration stages based on the constant-speed liquid output rate of the to-be-calibrated liquid pump and the rotation amount of the to-be-calibrated liquid pump during the acceleration/deceleration stages.

6. A beverage preparation device, **characterized by** comprising:
an input unit configured to receive a material recipe inputted by a user, wherein the material recipe comprises a plurality of target materials required for a beverage to be prepared currently, and a required weight of each target material;
a plurality of liquid storage tanks configured to store respective materials;
a liquid outlet, wherein each of the plurality of liquid storage tanks is in communication with the liquid outlet;
a plurality of liquid pumps corresponding one-to-one with the plurality of liquid storage tanks; and
a processor, wherein
the processor is configured to:
determine the target material with a maximum weight among the plurality of target materials based on the material recipe, wherein the target material with the maximum weight is the target material with the maximum required weight;
control the liquid pump corresponding to each target material other than the target material with the maximum weight to perform a liquid output operation based on the material recipe; and
determine, after the liquid output operation of the liquid pump corresponding to each target material other than the target material with the maximum weight is performed, an actual liquid output amount of the target material with the maximum weight based on a current total liquid output amount and a total amount of the beverage to be prepared currently, and control the liquid pump corresponding to the target material with the maximum weight to perform a liquid output operation based on the actual liquid output amount.

7. The beverage preparation device according to claim 6, **characterized in that** the processor is further configured to, before controlling the liquid pump corresponding to each target material to perform the respective liquid output operation:
determine whether the liquid pump corresponding to the target material is a to-be-calibrated liquid pump; and
calibrate, in response to the liquid pump corresponding to the target material being the to-be-calibrated liquid pump, the liquid pump during controlling the liquid pump to perform the liquid output operation based on the material recipe.

8. The beverage preparation device according to claim 7, **characterized in that** the processor is configured to calibrate the liquid pump by:
controlling the to-be-calibrated liquid pump to perform a first liquid output operation to output a liquid material with a first weight;
controlling the to-be-calibrated liquid pump to perform a second liquid output operation to output a liquid material with a second weight; and
calibrating the to-be-calibrated liquid pump based on the first weight, the second weight, and respective rotation amounts of the to-be-calibrated liquid pump during the first liquid output operation and the second liquid output operation, wherein a sum of the first weight and the second weight is less than a total liquid output amount of the to-be-calibrated liquid pump required by the material recipe.

9. The beverage preparation device according to claim 8, **characterized in that** during calibration of the to-be-calibrated liquid pump based on the first weight, the second weight, and the respective rotation amounts of the to-be-calibrated liquid pump during the first liquid output operation and the second liquid output operation, the processor is configured to:
obtain a first revolution count and a second revolution count, wherein the first revolution count is the rotation amount of the to-be-calibrated liquid pump during the first liquid output operation, and the second revolution count is the rotation amount of the to-be-calibrated liquid pump during the second liquid output operation; and
determine a constant-speed liquid output rate of the to-be-calibrated liquid pump based on the first weight, the second weight, the first revolution count, and the second revolution count, wherein the constant-speed liquid output rate is a liquid output amount per unit revolution of the to-be-calibrated liquid pump during constant-speed rotation.

10. The beverage preparation device according to claim 9, **characterized in that** the processor is further configured to:
determine a rotation amount of the to-be-calibrated liquid pump during acceleration/deceleration stages based on a duration for the acceleration/deceleration stages of the to-be-calibrated liquid pump; and
determine a liquid output amount of the to-be-calibrated liquid pump during the acceleration/deceleration stages based on the constant-speed liquid output rate and the rotation amount of the to-be-calibrated liquid pump during the acceleration/deceleration stages.
